# FASCICULE DE BREVET EUROPEEN

(11) **EP 1 250 298 B1**
(45) Date de publication et mention de la délivrance du brevet: **02.08.2006**
(21) Numéro de dépôt: 00967999.4
(22) Date de dépôt: 10.10.2000
(51) Int. Cl.: C04B 35/26, C01G 49/00, H01F 1/10, H01F 41/02, C01G 51/00

(54) **PROCEDE DE FABRICATION D'AIMANTS DU TYPE FERRITE**
VERFAHREN ZUR HERSTELLUNG VON FERRITMAGNETEN
METHOD FOR MAKING FERRITE MAGNETS

(30) Priorité: 30.11.1999 FR 9915093
(43) Date de publication de la demande: 23.10.2002
(73) Titulaire: UGIMAG S.A., F-38830 Saint-Pierre-d'Allevard (FR)
(72) Inventeur: TENAUD, Philippe, F-38190 Bernin (FR); BRANDO, Eric, F-04300 Forcalquier (FR)
(74) Mandataire: Pigasse, Daniel
(86) Numéro de dépôt international: PCT/FR2000/002817
(87) Numéro de publication internationale: WO 2001/040137

(56) Documents cités:
- EP-A- 0 905 718
- WO-A-00/31756
- WO-A-99/34376

## Description

### DOMAINE DE L'INVENTION

L'invention concerne le domaine des aimants permanents, et plus particulièrement des aimants de type ferrite comprenant la phase magnétoplumbite.

### ETAT DE LA TECHNIQUE

La présente invention est relative à des aimants permanents de type ferrite basés sur la phase magnétoplumbite M Fe₁₂ O₁₉ avec M=Sr, Ba, etc..., dans lesquels l'élément M est partiellement substitué par un élément R, choisi parmi les terres rares ou le bismuth, et dans lesquels l'élément Fe est partiellement substitué par au moins un métal de transition T.
De tels aimants sont déjà connus pour présenter des propriétés magnétiques élevées, comme divulgué dans la demande japonaise J10-149910 ou dans la demande européenne EP-0 905 718 ou dans la demande internationale WO99/34379.
Dans ces demandes, il est courant d'utiliser le lanthane La comme élément M, et le cobalt Co comme élément R.

La fabrication de tels aimants comprend les étapes suivantes :
a) formation d'un mélange des matières premières soit par un procédé humide pour former une dispersion, soit par un procédé à sec pour former des granulés,
b) calcination du mélange vers 1250°C pour former un clinker, ou chamotte, comprenant la phase magnétoplumbite recherchée, ledit mélange, sous forme soit de dispersion, soit de granulés, étant introduit dans un four de calcination,
c) broyage humide du clinker jusqu'à obtenir une dispersion aqueuse de particules de taille particulaire voisine de 1 µm, sous forme d'une pâte à environ 70% d'extrait sec,
d) la pâte est concentrée et comprimée sous champ magnétique orienteur de 1 Tesla environ et sous une pression de 30 à 50 MPa de manière à obtenir un comprimé à vert, appelé « green compact » en anglais, anisotrope et à 87% d'extrait sec,
e) après séchage et élimination de l'eau restante, frittage du comprimé à vert,
f) usinage final pour obtenir l'aimant de forme prédéterminée.

### PROBLEMES POSES

Le problème majeur des aimants selon l'état de la technique cité est leur coût très élevé. En effet, les éléments de substitution La et Co sont très coûteux, le lanthane étant beaucoup plus onéreux que le strontium, et l'oxyde de cobalt étant environ 200 fois plus cher que l'oxyde de fer.
En tout état de cause, le but de l'invention est donc d'augmenter le rapport qualité (performances) / prix (coûts) des aimants connus, soit en augmentant les performances, soit en abaissant le prix, soit en jouant sur les deux facteurs simultanément.
L'objet de l'invention est un procédé permettant d'atteindre ce but, ainsi que les aimants obtenus par ce procédé.

### DESCRIPTION DE L'INVENTION

Selon l'invention, dans le procédé de fabrication d'aimants permanents de type ferrite comprenant une phase magnétoplumbite de formule M₁₋ₓ Rₓ Fe_{12-y} T_{y} O₁₉ dans laquelle M = Ba, Sr, Ca, Pb, R = Bi ou éléments de la famille des terres rares, T = Mn, Co, Ni, Zn, avec x et y compris entre 0,05 et 0,5 :
a1) on forme dans un moyen de mélange, typiquement un mélangeur fonctionnant en discontinu, un mélange pulvérulent MP des matières premières relatives aux éléments M, R, Fe et T, typiquement sous forme d'oxyde, de carbonate, d'hydroxyde, etc..., comprenant de l'eau en quantité prédéterminée, typiquement nécessaire à la formation de granulés dans l'étape subséquente,
a2) puis on transforme, typiquement dans un granulateur fonctionnant en continu, ledit mélange en granulés à vert A, avec une éventuelle addition d'eau complémentaire,
b) on calcine lesdits granulés à vert pour former un clinker B, à base de phase magnétoplumbite de formule M₁₋ₓ Rₓ Fe_{12-y} T_{y} O₁₉,
c) on effectue un broyage humide dudit clinker, typiquement en milieu aqueux, pour obtenir une dispersion homogène C de fines particules désagglomérées de taille particulaire moyenne inférieure à 1,2 µm,
d) on concentre et comprime lesdites particules sous champ magnétique orienteur pour former un comprimé à vert D (« green compact » en anglais) anisotrope manipulable de forme prédéterminée,
e) on fritte ledit comprimé à vert anisotrope pour obtenir un élément fritté E,
f) on effectue éventuellement une mise aux dimensions finales dudit élément fritté, typiquement par usinage, pour obtenir l'aimant final F, le procédé étant caractérisé en ce que,
1) à l'étape a1) du procédé, on forme ledit mélange, en introduisant dans ledit moyen de mélange, un mélange à sec MS de poudres correspondant aux dites matières premières relatives aux éléments M et Fe et une dispersion fluide homogène DF desdites matières premières relatives aux éléments R et T dans typiquement ladite quantité d'eau prédéterminée,
2) à l'étape b) du procédé, on calcine lesdits granulés à vert A à une température et pendant un temps choisis,
de manière à obtenir. à la fin de l'étape b), un clinker B qui soit à la fois homogène en composition chimique et en taille, et de densité apparente, comprise entre 2,5 et 3,5, et qui soit facile à broyer lors de l'étape c).

Le procédé selon l'invention se distingue nettement des procédé selon l'état de la technique. En effet, la demanderesse a pu comparer les procédés selon l'état de la technique et selon l'invention, toutes choses restant égales par ailleurs. Elle a constaté que les différences de procédé conduisaient à de grandes différences de performances magnétiques finales des aimants et/ou de coût de fabrication. Elle a émis à ce sujet différentes hypothèses et interprété comme suit les faits observés :
A) Comparaison du procédé de l'invention avec le procédé humide de l'état de la technique : dans ce procédé de l'état de la technique, on forme une dispersion des matières premières dans de l'eau et ensuite on introduit la dispersion formée directement dans le four de calcination, typiquement un four rotatif fonctionnant en continu, et, en sortie de four, on récupère le clinker B.
   Dans ce procédé, la composition chimique de la dispersion à calciner est très homogène, et donc aussi celle du clinker B obtenu, par contre, la taille des clinkers obtenus en fin de calcination est très hétérogène, et s'étend typiquement de 0,5 mm à 10 mm.
   Une taille de clinker est considérée comme homogène lorsque l'étendue T_{M} - Tₘ (différence entre la taille maximum et la taille minimum) est inférieure à la moyenne de ces valeurs (T_{M}+Tₘ)/2.
   La demanderesse a observé que, lors du broyage humide de l'étape sous c), il était impossible de broyer ce clinker pour obtenir une dispersion C de particules de taille particulaire homogène et centrée autour de 1 µm, sans doute parce que les granulés de petite taille sont beaucoup plus vite broyés que les granulés de grande taille, le rapport des tailles étant typiquement de 1 à 20 ou même plus. En utilisant ce procédé, la demanderesse a observé la formation de particules ultra-fines, c'est-à-dire de taille particulaire typiquement inférieure à 0,3 µm. Ces particules sont connues pour présenter de nombreux inconvénients :
   - d'une part, la concentration à l'étape sous d), typiquement par filtration, est coûteuse par le niveau élevé des pertes (entraînement des particules les plus fines avec les eaux) et par la durée de filtration ou de concentration, compte tenu de la présence de particules ultra-fines qui obstruent les médias de filtration,
   - d'autre part, les particules ultra-fines ne se laissent pas orienter par le champ orienteur, parce que le niveau de leur couple magnétique est trop bas, ce qui conduit à un aimant final de rémanence Br trop faible,
   - enfin, le temps et l'énergie de broyage consacrée au broyage de ces particules ultra-fines sont dépensés en pure perte.
B) Comparaison du procédé de l'invention et du procédé à sec de l'état de la technique: dans le procédé selon l'état de la technique, la première étape sous a1) comprend la formation d'un mélange de poudres MP comprenant tous les constituants de l'aimant final ainsi que la majeure partie de la quantité d'eau nécessaire à la formation des granulés à l'étape a2), puis ce mélange puivérulent MP est transformé en granulés à vert A à l'étape a2). Pour cela, on utilise typiquement un granulateur dans lequel on introduit, en continu, d'une part le mélange de poudres MP, et d'autre part, la quantité d'eau complémentaire nécessaire à la formation de granulés, tout en retirant en continu les granulés à vert A formés. On observe que les granulés A obtenus, sensiblement sous forme de « billes », présentent une taille relativement homogène, allant typiquement de 4 à 6 mm de « diamètre » équivalent. Par ailleurs, après calcination, on obtient un clinker B présentant sensiblement la taille des granulés A introduits dans le four de calcination. Un tel clinker permet, avec des durées de broyage plus ou moins longues, d'obtenir une dispersion C et, après filtration, une pâte dont la distribution de la taille particulaire est meilleure que celle obtenue avec le procédé humide, car plus étroite et mieux centrée autour d'environ 1 µm.
Cependant, la demanderesse, à la suite de ses travaux a acquis la conviction que, dans le cas en particulier des aimants comprenant des éléments de substitution partiels - éléments R et T, typiquement La et Co respectivement, ajoutés en quantité relativement faibles, les aimants de l'état de la technique obtenus par ce procédé ne présentaient pas les propriétés optimum.
En effet, dans le cadre de ses travaux sur les procédés de fabrication, la demanderesse a étudié différents ferrites et a, en particulier, mesuré les valeurs du champ d'anisotropie Ha, notamment en fonction de la nature de l'élément M et du degré de substitution x et y du ferrite, par la méthode SPD « single point detection », telle que décrite par MM. G. Asti et S. Rinaldi dans le Journal of Applied Physics, Vol 45, No 8, août 1974, pages 3600 à 3610.
Cette méthode consiste à mesurer l'aimantation « m » du clinker B en fonction d'un champ appliqué H, et à porter sur un graphique la courbe d²m/dH² en fonction de H : le champ d'anisotropie Ha est égal au champ H pour lequel d²m/dH² présente un point singulier.

La demanderesse a pu observer, comme le prouvent les mesures effectuées sur le clinker B et sur les aimants E ou F des essais 1 a à 6c, que cette méthode permet d'accéder à la valeur de Ha, même à partir d'un matériau magnétique brut et pratiquement isotrope tel qu'un clinker.
La demanderesse a pu observer, comme cela sera vu dans les exemples, que la valeur de Ha obtenue est pratiquement la même, que cette dernière soit mesurée sur un clinker B, relativement isotrope, ou sur un aimant final (E ou F) obtenu après frittage, relativement anisotrope, de sorte que cette valeur Ha est bien une caractéristique intrinsèque d'un clinker de matériau ferrite donné, valeur indépendante de l'orientation et de la taille particulaire, et donc de tous les traitements des étapes postérieures à l'étape b) de synthèse de la phase magnétoplumbite.
Ainsi, il apparaît que cette valeur de Ha est indépendante, une fois la phase magnétoplumbite formée, des traitements de broyage, compactage et de frittage, et d'une manière générale de la micro-structure et de la taille des particules qui peuvent résulter des traitements postérieurs à l'étape b), ce qui s'est trouvé très utile pour arriver à comprendre les phénomènes en jeu.
En outre, en comparant les valeurs de Ha et les propriétés magnétiques finales (Br, HcJ et facteur de forme d'un cycle d'hystérésis) pour différents matériaux et en fonction de différents procédés de fabrication du clinker B, la demanderesse a fait différentes observations et émis des hypothèses qui ont conduit à la présente invention :
- d'une part, elle a trouvé que, dans certains cas, notamment dans le cas où le mélange des éléments, à l'étape a), est fait par le procédé dit humide, les ferrites substitués par R et T de l'état de la technique présentaient des propriétés magnétiques finales, trop faibles, qui n'étaient pas en rapport avec leurs valeurs, relativement élevées, de Ha,
- d'autre part, elle est arrivé à la conclusion que, pour une composition d'aimant donnée typiquement définie par M, R, T, x et y, c'est le procédé dit humide qui permettait d'obtenir les valeurs de Ha les plus élevées, ces valeurs, mesurées sur le clinker, plafonnant dès que le clinker B présentait typiquement une densité d'au moins 2,5. La demanderesse a émis l'hypothèse que, dans ces conditions, ces valeurs maximales de Ha obtenues étaient des valeurs intrinsèques maximales caractéristiques d'une composition d'aimant donnée, très proches des valeurs mesurées sur un monocristal de même composition.

En conséquence, la demanderesse a considéré que la comparaison entre des valeurs de Ha mesurées sur le clinker B obtenu dans un procédé donné aux valeurs de Ha intrinsèques pouvait être une mesure de l'homogénéité chimique du clinker, ou encore du taux de transformation en phase magnétoplumbite.

Ainsi, la demanderesse a trouvé que, notamment dans le cas où la formation des granulés à vert A, à l'étape a), se fait par le procédé dit à sec de l'état de la technique, le niveau de Ha du clinker obtenu ensuite était trop faible, compte tenu de la nature chimique des éléments M, R et T du ferrite, comparé aux valeurs intrinsèques de Ha de clinkers obtenus par le procédé dit humide, de même nature chimique, et toutes choses étant égales par ailleurs, notamment les conditions de calcination. Ainsi, la demanderesse, ayant émis l'hypothèse selon laquelle le relatif bas niveau de performances des aimants ferrites substitués par R et T pouvait venir d'une transformation insuffisamment complète dudit mélange en phase magnétoplumbite, le clinker obtenu par le procédé à sec n'ayant pas une composition chimique assez homogène et assez riche en phase magnétoplumbite, la demanderesse a donc aussi émis une autre hypothèse et supposé que cela pouvait résulter d'une homogénéité de composition chimique insuffisante des granulés à vert A de départ, à l'entrée du four du calcination. La demanderesse a exploré cette voie, ce qui a conduit à modifier le procédé de l'étape a1), comme indiqué précédemment.

Suite à ses travaux, la demanderesse a également étudié la calcination des granulés à vert A obtenus selon l'invention, et elle a observé qu'il existait une plage de densité optimum pour le clinker obtenu selon l'invention, à l'issue de l'étape de calcination.
En effet, elle a observé que, dans le cas des granulés à vert selon l'invention, les performances magnétiques des aimants étaient meilleures lorsque la densité apparente dₐ des clinkers B formés était comprise entrer 2,5 et 3,5.

Pour expliquer l'existence de cette plage, la demanderesse a émis les hypothèses suivantes, sachant qu'il est déjà connu que la densité du clinker augmente avec la température et le temps de séjour dans le four de calcination :
- d'une part, au-dessous d'une densité apparente de 2,5, il semble que le clinker présente une composition chimique hétérogène, et certainement une teneur trop faible en ferrite de type magnétoplumbite, comme si la réaction de formation du ferrite était incomplète,
- d'autre part, au-dessus d'une densité apparente de 3,5, le clinker devient plus dur et on peut penser que, du fait d'un broyage plus long pour aboutir à la même taille particulaire moyenne, il se forme davantage de particules ultra-fines, qui comme déjà indiqué, ne contribuent pas aux propriétés magnétiques finales, ce qui, dans les deux cas, peut contribuer à limiter les performances magnétiques finales.

En définitive, la demanderesse a mis au point un procédé qui cumule les avantages des deux procédés connus de l'état de la technique, sans en avoir les inconvénients, et qui permet de former un clinker présentant simultanément une grande homogénéité de taille et de structure chimique avec une teneur élevée en phase magnétoplumbite.

Ce procédé selon l'invention est donc une combinaison de deux moyens, qui portent l'un sur l'homogénéité de la composition chimique des granulés à vert A à calciner, appelés « green granules » en anglais, et donc de celle du clinker B formé après calcination - la taille ou la distribution de taille des granulés à vert A étant peu modifiée lors de la calcination, l'autre sur le contrôle de la calcination des granulés à vert A, non par la température elle-même, mais par la densité apparente du clinker B formé, ces deux moyens ayant été reconnus comme essentiels par la demanderesse pour améliorer la valeur du champ d'anisotropie Ha et les propriétés magnétiques finales des aimants.
Comme les fours de calcination fonctionnent typiquement en continu et qu'il y a une relation biunivoque entre la densité apparente dₐ du clinker et la température de calcination, elle-même fonction de la consommation en carburant du moyen de chauffage du four - typiquement un brûleur alimenté en gaz, il est aisé de piloter et de réguler la consommation du brûleur par la mesure de densité apparente du clinker en sortie de four de calcination.

Il est bien connu que les mesures de températures dans les fours tournants continus, effectuées typiquement par lunette pyrométrique, sont relativement peu précises, moins d'ailleurs en ce qui concerne la mesure elle-même, qu'en ce qui concerne la distribution très hétérogène de la température dans chacune des portions d'espace ou de volume du four. Il est donc très avantageux de pouvoir piloter un four en se passant de ce type de mesure de température, même si les mesures de températures restent toujours utilisées notamment pour vérifier en continu et en temps réel notamment la stabilité du fonctionnement du four.

Comme cela sera illustré dans les essais comparatifs, les résultats obtenus avec le procédé selon l'invention ont montré une amélioration très nette des performances magnétiques des aimants E et F, toutes choses égales par ailleurs, ce qui permet de penser que les hypothèses de la demanderesse sont sans doute valables.

### DESCRIPTION DES FIGURES

La figure 1 représente la relation schématique entre la température T de calcination, en abscisse, et, en ordonnée, la densité apparente dₐ du clinker B obtenu, pour des granulés à vert A de départ de même composition chimique.
Les figures 2 et 3 sont des courbes donnant, en ordonnée les valeurs intrinsèques du champ d'anisotropie Ha (en kA/m), à 20°C, de ferrites de formule M₁₋ₓ Rₓ Fe_{12-y} T_{y} O₁₉ avec R = La et T = Co, et M = Sr pour la figure 2 et M = Ba pour la figure 3, et en abscisse, les valeurs de x et y, avec x typiquement pris égal à y.
   Ces mesures ont été obtenues à partir de clinkers obtenus par la voie dite humide, avec un mélange homogène et des conditions de calcination suffisantes pour former la totalité de la phase magnétoplumbite, et correspondent ainsi à une valeur maximum pour Ha, typiquement obtenue avec un clinker de densité supérieure à 2,5.

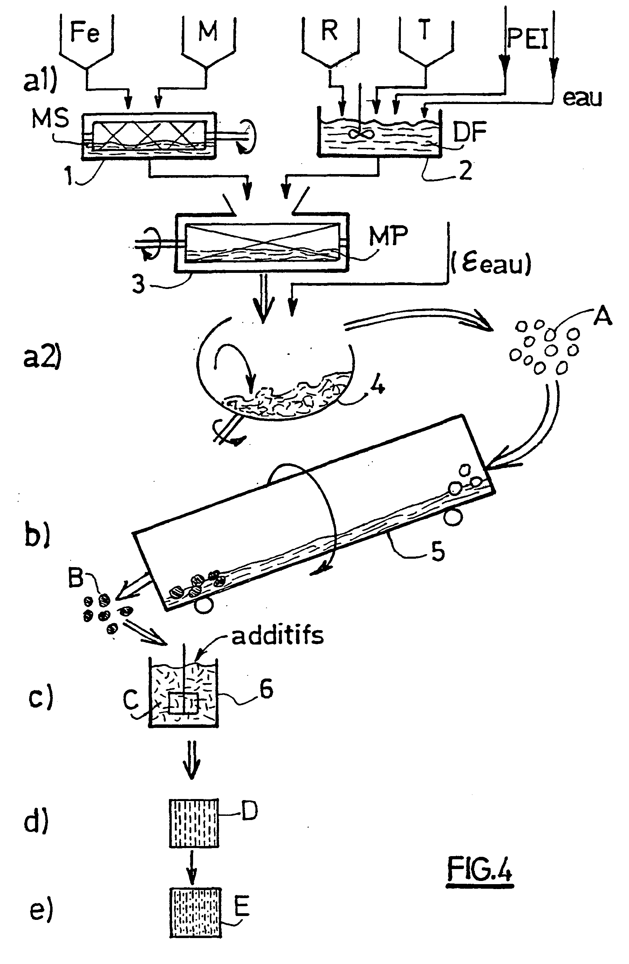

La figure 4 est une représentation schématique des principales étapes du procédé selon l'invention :
   - l'étape a1) vise à former, typiquement en discontinu par lot, un mélange pulvérulent MP à granuler. Pour cela, on forme un premier mélange à sec MS des matières, typiquement des oxydes, carbonates ou hydroxydes, porteuses des éléments Fe et M (typiquement égal à Sr ou Ba), dans un mélangeur à sec (1), et un second mélange fluide sous forme d'une dispersion fluide DF en introduisant dans un disperseur (2) sous agitation, de l'eau, un agent déflocculant ou dispersant référencé « PEI » et les matières, typiquement des oxydes, carbonates ou hydroxydes, porteuses des éléments R (typiquement La) et T (typiquement Co), puis on introduit le mélange à sec MS et la dispersion fluide DF dans un mélangeur discontinu (3), du type mélangeur de poudres, pour former le mélange pulvérulent MP,
   - l'étape a2) vise à transformer, dans un granulateur (4) fonctionnant en continu, le mélange pulvérulent MP en granulés à vert référencés « A » et représentés sous forme de petits ronds « clairs »,
   - l'étape b) comprend la calcination des granulés à vert A dans un four de calcination (5), typiquement incliné et fonctionnant en continu, qui conduit à la formation du clinker référencé « B » et représenté par des petit ronds « foncés »,
   - l'étape c) de broyage du clinker « B » comprend typiquement une étape de broyage à sec et une étape de broyage humide dans un broyeur disperseur (6) pour atteindre une taille particulaire voisine de l'ordre du micromètre, ce qui conduit à une dispersion « C » de fines particules, ou à la pâte correspondante après filtration. On n'a schématisé que le broyage en milieu humide, broyage au cours duquel peuvent être incorporés des additifs utiles lors du frittage de l'étape e).
   - l'étape d) de compression et d'orientation conduit à un bloc « D » de particules magnétiques orientées.
   - l'étape e) de frittage conduit à un aimant sous forme d'un bloc « E » de particules liées entre elles.
      On n'a pas représenté l'étape finale f) de mise en forme ou d'usinage conduisant à un aimant final F usiné.

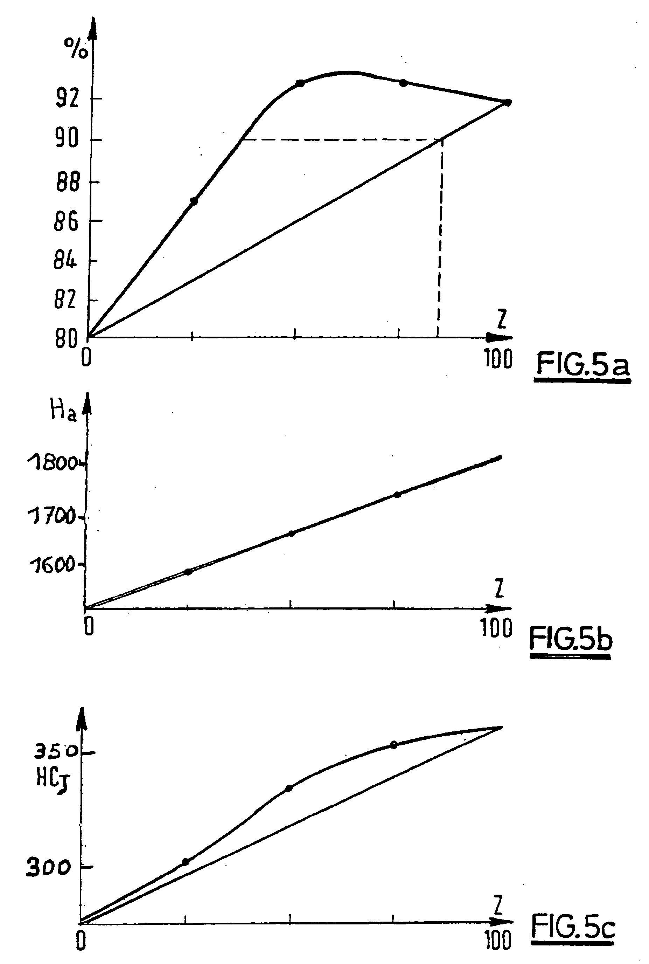

Les figures 5a à 5c illustrent, en ordonnée, les propriétés magnétiques en fonction de la teneur z, en abscisse en %, en ferrites substitué dans un mélange de ferrite substitué et du ferrite correspondant non substitué, selon les exemples 7 à 10 et 1c.
La figure 5a illustre un effet de synergie du rapport Hk/HcJ : le caractère « carré » du cycle d'hystérésis est en %.
La figure 5b montre qu'il n'y a pas de synergie pour le champ d'anisotropie Ha, en kA/m, en ordonnée.
La figure 5c illustre un effet de synergie pour le champ coercitif HcJ, en kA/m, en ordonnée.

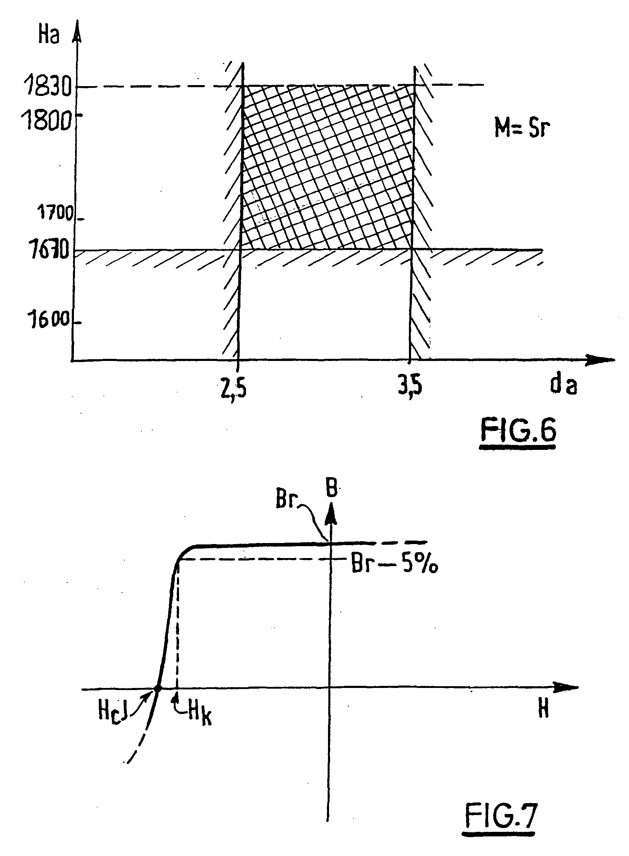

La figure 6 illustre, de manière synthétique, le domaine de l'invention en considérant la champ anisotropique Ha, en ordonnée, et la densité apparente dₐ, en abscisse, du clinker B obtenu après calcination (M=Sr, R=La, T=Co) selon le procédé de l'invention.
   Selon l'invention, ces deux paramètres Ha et dₐ conditionnent et déterminent toutes les propriétés magnétiques finales des aimants E:
   - Ha doit être le plus élevé possible et, dans le cas particulier des ferrites de Sr substitués par La et Co, de préférence supérieur à 1670 kA/m, afin d'avoir une homogénéité chimique suffisante, c'est-à-dire une teneur en phase magnétoplumbite la plus élevée possible. On a représenté, par une ligne en pointillés, la valeur maximum obtenue dans les essais (Ha = 1830 kA/m), de sorte que la zone centrale hachurée représente le domaine des clinkers obtenus dans ces essais.
   - la densité apparente dₐ doit être comprise entre 2,5 et 3,5 : une valeur inférieure à 2,5 dénoterait une homogénéité chimique insuffisante, et une valeur supérieure à 3,5 implique un temps de broyage trop élevé et, de ce fait, la formation d'une trop grande quantité de particules ultra-fines.
La figure 7 représente une portion de la courbe d'aimantation Br = f (H), sur laquelle ont été indiqués Hk et Hcj, de manière à montrer la signification du rapport Hk/Hcj comme mesure du caractère plus ou moins carré de la courbe d'aimantation (« squareness » en anglais).

### DESCRIPTION DETAILLEE DE L'INVENTION

Selon l'invention, ladite dispersion fluide DF peut comprendre :
- eau : 55 à 85 % en poids
- élément R (exprimé sous forme d'oxyde) : 10 à 30 % en poids
- élément T (exprimé sous forme d'oxyde) : 5 à 15 % en poids
En outre, ladite dispersion fluide DF peut comprendre un agent défloculant ou dispersant, choisi en nature et teneur pondérale, de manière à avoir une dispersion présentant à la fois une viscosité suffisamment basse pour que la dispersion puisse s'écouler du disperseur (2) ou être pompée, et une finesse de dispersion telle que la tailles moyenne des particules ou agglomérats relatifs aux éléments R et T soit inférieure à 25 µm (mesure par passage au tamis correspondant).
Cet agent défloculant ou dispersant peut être présent dans la dispersion à une teneur pondérale typiquement comprise entre 0,5 et 2 %, soit à la teneur minimum nécessaire pour obtenir une dispersion fluide, homogène et stable.
Ces dispersants peuvent agir par action électrostatique ou par effet stérique, et ils sont en eux-mêmes connus pour obtenir des dispersions aqueuses de particules minérales, notamment dans les domaines des peintures ou des encres . On peut utiliser des polymères anioniques (par exemple des polyacrylates d'ammonium) ou cationiques (par exemple des polyéthylèneimines (PEI) neutralisés par l'acide nitrique).

Selon l'invention, on peut introduire dans ledit mélangeur (3), typiquement en discontinu par lot, ou éventuellement en continu, ledit mélange à sec MS de poudres, qui apporte les éléments Fe et M, et ladite dispersion fluide DF, qui apporte les éléments R et T, 0,1 à 0,2 litre de ladite dispersion fluide DF étant introduit par kilogramme dudit mélange à sec MS. Voir figure 4.
Ce rapport entre le volume de dispersion DF et le poids de mélange à sec MS assure à la fois la stoechiométrie nécessaire pour former le ferrite de phase magnétoplumbite recherchée, et presque la totalité de la quantité d'eau nécessaire pour former des granulés à vert A à l'étape a2). Mais il est à noter que le mélange MP reste typiquement sous la forme d'un mélange pulvérulent, bien que contenant déjà la majeure partie de l'eau nécessaire à la granulation du mélange pulvérulent MP.
Il importe que ladite dispersion fluide DF conserve sa finesse et son homogénéité jusqu'à ce qu'elle soit introduite dans le mélangeur de poudres (3), de sorte que, de préférence, on la maintient en permanence sous agitation pour éviter toute sédimentation des poudres correspondant aux apports en éléments R et T.

De préférence, à l'étape b), ladite calcination est effectuée dans le four de calcination (5) à une température suffisamment haute pour former la phase magnétoplumbite et pendant une durée choisies pour obtenir une densité allant de 2,7 à 3,1, et de préférence pour obtenir une densité allant de 2,75 à 3. Ces valeurs permettent d'avoir simultanément un bon compromis entre un rendement ou taux de réaction chimique en phase magnétoplumbite qui doit être le plus élevé possible, et une densité apparente qui doit être la plus basse possible, à la fois pour réduire le temps de broyage et augmenter ainsi la productivité, et surtout pour limiter la quantité de particules ultra-fines qui se forment durant le broyage du clinker de ferrite.
De préférence, la calcination a lieu sous une atmosphère comprenant un excès significatif d'oxygène avec une pression partielle en oxygène supérieure à 0,1 atmosphère.

Selon l'invention, on peut choisir les éléments M, R, T et les valeurs de x et y, de manière à ce que, à l'issue de l'étape b), ledit clinker B présente une valeur de champ d'anisotropie Ha typiquement au moins égale à 1592 kA/m, et de préférence supérieur à 1671 kA/m à 20°C.
De manière encore plus préférentielle, on peut choisir les éléments M, R, T et les valeurs de x et y, de manière à ce que, à l'issue de l'étape b), ledit clinker présente une valeur de champ d'anisotropie Ha au moins égale à 1711 kA/m à 20°C. Pour cela, on choisira de préférence des ferrites de Sr plutôt que des ferrites de Ba.

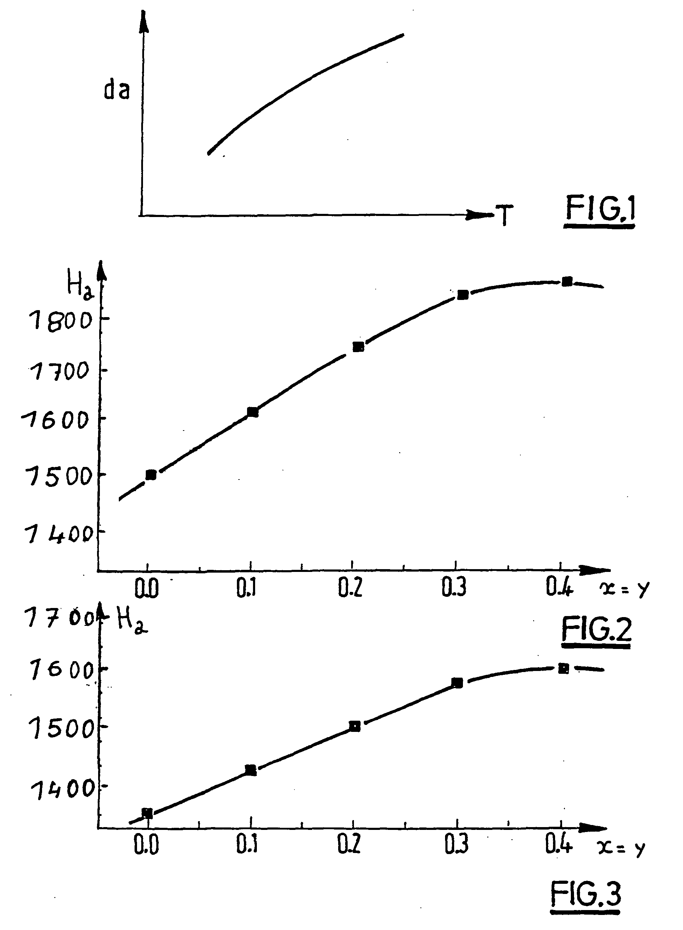

Cependant, dans le cas de ferrites de formule M₁₋ₓ Rₓ Fe_{12-y} T_{y} O₁₉ avec M = Sr, R = La et T = Co, la demanderesse a choisi des valeurs de x et y comprises entre 0,10 et 0,35, et de préférence entre 0,15 et 0,25, x étant typiquement pris égal à y, bien que des valeurs de Ha plus élevées soient possibles pour des valeurs plus élevées de x,y, comme illustré aux figures 2 et 3. En effet, il importe de noter que, selon les observations de la demanderesse, les performances magnétiques optimum des aimants ferrites E ou F obtenus ne se situent pas, comme on pourrait le penser pour les valeurs élevées de x et y, typiquement x et y > 0,35 qui conduisent aux valeurs les plus élevées de Ha, comme indiqué sur les figures 2 et 3, mais plutôt pour des valeurs de x,y voisines de 0,2. Pour expliquer cet état de fait, la demanderesse a émis l'hypothèse que le rendement de la transformation en phase magnétoplumbite du mélange initial durant la calcination devait sans doute diminuer pour des valeurs croissantes de x et y, du moins avec le procédé selon l'invention. Ainsi, le domaine dans lequel x,y ont des valeurs allant de 0,15 à 0,25 apparaît donc comme un domaine optimum qui constituerait, selon les hypothèses de la demanderesse, le meilleur compromis entre une valeur élevée du champ d'anisotropie Ha, qui augmente avec x,y, et le rendement de la transformation en phase magnétoplumbite du mélange initial, qui diminuerait avec x,y, selon une hypothèse de la demanderesse.

A l'étape d) du procédé selon l'invention, on peut comprimer lesdites particules sous une pression de 30-50 MPa sous champ magnétique orienteur d'environ 1 Tesla, pour former un comprimé à vert D anisotrope.

Selon une modalité avantageuse de l'invention, on peut utiliser un procédé selon l'invention dans lequel :
1) on approvisionne un clinker de ferrite B' de formule M Fe₁₂ O₁₉, ferrite non substitué
2) on le mélange audit clinker de ferrite B de formule M₁₋ₓ Rₓ Fe_{12-y} T_{y} O₁₉, selon l'invention, typiquement lors de ladite étape c) du procédé selon l'invention, de manière à obtenir des aimants permanents à moindre coût, et à meilleur rapport performance/coût.

La proportion massique z de clinker B de formule M₁₋ₓ Rₓ Fe_{12-y} T_{y} O₁₉ dans le mélange des deux clinkers B et B' peut être comprise entre 0,20 et 0,80, et, de préférence, entre 0,30 et 0,70.
Il est avantageux d'appliquer audit clinker B' de formule M Fe₁₂ O₁₉ le même critère en ce qui concerne la densité apparente en fin de calcination, qui doit être comprise entre 2,5 et 3,5.
Comme les exemples le montreront, et comme illustré sur les figures 5a et 5c, il apparaît de manière surprenante, et pour une raison actuellement inconnue, un effet de synergie en ce qui concerne certaines propriétés magnétiques, certaines propriétés étant nettement supérieures à celles prévues par la loi des mélanges et interpolation linéaire.
Ainsi, ce moyen est un moyen complémentaire pour augmenter encore le rapport performance / coût des aimants de ferrite selon l'invention.

Comme déjà mentionné, il est avantageux que l'étape b) de calcination soit pilotée, notamment en ce qui concerne la température de calcination, en mesurant la densité apparente du clinker B obtenu à l'issue de cette étape b).

Un autre objet de l'invention est un procédé de fabrication d'une poudre de ferrite par le procédé de fabrication d'aimants permanents selon l'invention dans lequel, à l'issue de l'étape b), on réduit en poudre ledit clinker B, et dans lequel les étapes suivantes c) à f) sont supprimées.

Un autre objet de l'invention est constitué par les aimants permanents de ferrite E ou F obtenus par le procédé selon l'invention et plus particulièrement par les aimants permanents qui présentent un champ d'anisotropie Ha au moins égal à 1711 kA/m, et de préférence au moins égal à 1751 kA/m, et mieux, au moins égal à 1791 kA/m, voire supérieur à 1830 kA/m.

Un autre objet de l'invention est constitué par les moteurs comprenant des aimants obtenus par le procédé selon l'invention.

### EXEMPLES DE REALISATION

### DESCRIPTION GENERALE DES ESSAIS

On a réalisé 6 séries d'essais (essais notés de 1a, 1b, 1c à 6a, 6b et 6c) ainsi que 4 essais complémentaires (essais noté 7 à 10), qui diffèrent par la composition chimique ou la température de calcination.
Pour chaque série d'essais, on est parti de mêmes matières premières qui apportent les éléments Fe, M, R et T, et on a fabriqué 3 mélanges de même composition chimique :
- un selon tout ou partie du procédé de l'invention : essais 1c, 3c et 5c selon l'invention et essais 2c, 4c et 6c selon une partie de l'invention,
- un selon le procédé humide de l'état de la technique : essais 1a à 6a,
- et un selon le procédé à sec de l'état de la technique : essais 1b à 6b.
   Pour une même série d'essais, on a formé, à l'étape b), des clinkers B dans les mêmes conditions, notamment avec la même température de calcination.

Le procédé selon l'invention est en grande partie décrit, de manière générique, sur la figure 4.

### MATIERES PREMIERES :

Dans tous les exemples, on est parti des matières premières du commerce, sous forme d'oxydes pour certains éléments et de carbonates pour d'autres :
- pour Fe : Fe₂O₃
- pour l'élément M : SrC03 ou BaC03,
- pour l'élément R : La₂O₃
- pour l'élément T : Co₃O₄
L'oxyde de fer Fe₂O₃ utilisé présentait une surface spécifique de 3 à 4 m²/g, une densité apparente en vrac (« bulk density » en anglais) de 0,6 et une taille particulaire de 0,7 µm (mesure Fisher).
Les carbonates de Sr ou Ba présentaient une pureté pondérale supérieure à 98%, une densité en vrac de 0,6 et une taille particulaire de 1 µm (mesure Fisher).

Les oxydes de La et de Co présentaient une pureté pondérale d'au moins 99% et une taille particulaire inférieure au µm (mesure Fisher).

En ce qui concerne la composition chimique, les ferrites suivants ont été fabriqués M₁₋ₓ Rₓ Fe_{12-y} T_{y} O₁₉ avec M = Sr (séries 1 à 4 et essais 7 à 10) ou Ba (séries 5 et 6) avec x = y = 0,2 ou 0,3

### PROCEDES:

En ce qui concerne l'étape a1), et pour les essais selon l'invention et selon le procédé à sec de l'état de la technique, on a formé le mélange pulvérulent MP dans un mélangeur (3) de marque EIRICH avec les paramètres suivants : mélange d'un lot de 400 kg pendant 12 min avec une vitesse de rotation de 800 t/min, complété par un mélange pendant 7 min à 400 t/min.
Mais, dans le procédé selon l'invention, comme schématisé à la figure 4, on formé d'abord un mélange à sec MS des poudres correspondant aux éléments Fe et M, et une dispersion fluide DF correspondant aux éléments R (=La) et T (=Co), et on les introduit dans le mélangeur (3), dans un proportion de 0,17 litre de dispersion fluide DF par kg de mélange à sec MS.
Par contre, dans le procédé à sec selon l'état de la technique, on a introduit dans le mélangeur (3) toutes les poudres correspondant aux éléments Fe, M, R et T, ainsi que la même quantité d'eau que celle ayant servi à former la dispersion fluide DF, soit 14 % en poids du mélange total.
En ce qui concerne l'étape a2), la granulation a été conduite dans un granulateur fonctionnant en continu et produisant environ 400 kg de granulés à vert /h. On a introduit le mélange de poudre MP en continu, pratiquement à 400 kg/h, ainsi que de l'eau de granulation à 4 1/h, tout en retirant en continu les granulés formés.

Dans le procédé dit humide de l'état de la technique, les matières correspondant aux éléments Fe, M, R et T ont été dispersées dans de l'eau, comme indiqué ensuite dans la description spécifique des essais.

En ce qui concerne l'étape b) de calcination : pour chaque série d'essais, on a utilisé un même four tournant (5) fonctionnant en continu, avec un temps de séjour moyen de 30 min, et avec les mêmes conditions expérimentales pour une même série d'essais comparatifs. Ce four, chauffé au gaz, a 14 m de long et produit, en continu, 800 kg de clinker /h.
On a fait varier la densité du clinker obtenu en faisant varier la température de calcination selon les séries, chaque série étant repérée par une température mesurée en un même point du four : essais à 1180°C (séries 1 et 3), 1185°C (série 5), 1260°C (série 4), 1265°C (série 2), 1270°C (série 6).
Dans le cas du procédé selon l'invention et du procédé à sec de l'état de la technique, les granulés à vert formés à l'étape a2) ont été introduits dans le four de calcination, alors que, dans le cas du procédé humide selon l'état de la technique, la dispersion obtenue a été introduite directement dans le four de calcination.

En ce qui concerne l'étape c), on a dans tous les cas effectué un broyage du clinker C, d'abord à sec dans un broyeur pendulaire jusqu'à une taille particulaire de 2 µm (mesure Fisher), puis en phase humide dans un broyeur à billes (billes d'acier de 6 mm), durant le temps nécessaire pour obtenir une taille particulaire moyenne de 0,8 µm (mesure Fisher), la dispersion aqueuse soumise au broyage comprenant 34 % d'eau en poids.
On a noté pour chaque essai la durée de broyage : voir les résultats des essais
Durant le broyage humide, on a incorporé des additifs : 1 % en poids de CaSiO₃ et 1 % en poids de SrCO₃, pourcentage pris par rapport au clinker à 100% de matière.

En ce qui concerne l'étape d), on a comprimé les particules broyées obtenues à l'étape c), sous une pression de 40 MPa et sous champ magnétique orienteur de 0,8 Tesla. On obtient ainsi des blocs cylindriques comprenant encore 12% d'eau qui ont été séchés en étuve à 80°C.

En ce qui concerne l'étape e), on a fritté les blocs obtenus en four électrique à 1250°C pendant 4 heures, sous air, à la pression atmosphérique.

### DESCRIPTION SPECIFIQUE DES ESSAIS :

Dans les compositions, tous les pourcentages % sont en poids.

### Première série d'essais : fabrication de ferrites Sr₁₋ₓ, Laₓ Fe_{12-y} Co_{y} O₁₉ avec x,y = 0,3

| | Essai 1a | Essai 1b | Essai 1c (invention) | |
|---|---|---|---|---|
| * Mélanges formés à l'étape a1) | mélange humide | mélange à sec | 1) dispersion fluide DF | |
| | Fe₂O₃ : 33,6 % | Fe₂O₃ 84,0 % | | La₂O₃ : 22 % |
| | SrCO₃ : 3,7 % | SrCO₃ : 9,3 % | | Co₃O₄ : 11 % |
| | La₂O₃ : 1,8 % | La₂O₃ 4,5 % | | PEI : 2 % |
| | Co₃O₄ : 0,9 % | Co₃O₄ : 2,2 % | | Eau : 65 % |
| | eau : 60,0 % | + eau (14% du mélange de poudres) = mélange MP | 2) mélange à sec MS | |
| | | | | Fe₂O₃ : 90,0 % |
| | | | | SrCO₃ : 10,0 % |
| | | | | = mélange MP (inv.) |
| | | | | |
| * Granulation à l'étape a2) | ----- | eau : 1% p. de MP | eau : 1% de MP | |
| * Calcination à l'étape b) | 1180°C | 1180°C | 1180°C | |
| * Broyage (heures) à l'étape c) | 14 | 8 | 10 | |

| | | | | |
|---|---|---|---|---|
| Remarques : | | | | |
| - PEI est un polyéthylèneimine neutralisé par l'acide nitrique | | | | |
| - le mélange MP comprend 0,17 litre de dispersion DF par kg de mélange MS | | | | |

### Deuxième série d'essais : elle ne diffère de la précédente que par la température de calcination.

| | Essai 2a | Essai 2b | Essai 2c |
|---|---|---|---|
| * Calcination à l'étape b) | 1265°C | 1265°C | 1265°C |

### Troisième série d'essais : fabrication de ferrites Sr₁₋ₓ Laₓ Fe_{12-y} Co_{y} O₁₉ avec x,y = 0,2

| | Essai 3a | Essai 3b | Essai 3c (invention) | |
|---|---|---|---|---|
| * Mélanges formés à l'étape a1) | mélange humide | mélange à sec | 1) dispersion fluide DF | |
| | Fe₂O₃ : 34,0 % | Fe₂O₃ : 85,0 % | | La₂O₃ : 16 % |
| | SrCO₃ : 4,2 % | SrCO₃ : 10,6 % | | Co₃O₄ : 8 % |
| | La₂O₃ : 1,2 % | La₂O₃ 2,9 % | | PEI : 1 % |
| | Co₃O₄ : 0,6 % | Co₃O₄ : 1,5 % | | Eau : 75 % |
| | eau : 60,0 % | + eau (14% | 2) mélange à sec MS | |
| | | du mélange de | | Fe₂O₃ : 90,0 % |
| | | poudres) | | SrCO₃ : 10,0 % |
| | | = mélange MP | | = mélange MP (inv.) |
| | | | | |
| * Granulation à l'étape a2) | ----- | eau : 1 % p. de MP | | eau : 1 % p. de MP |
| * Calcination à l'étape b) | 1180°C | 1180°C | | 1180°C |
| * Broyage (heures) à l'étape c) | 14 | 8 | 10 | |

| | | | | |
|---|---|---|---|---|
| Remarques : | | | | |
| - PEI est un polyéthylèneimine neutralisé par l'acide nitrique | | | | |
| - le mélange MP comprend 0,16 litre de dispersion DF par kg de mélange MS | | | | |

### Quatrième série d'essais : elle ne diffère de la précédente que par la température de calcination.

| | Essai 4a | Essai 4b | Essai 4c |
|---|---|---|---|
| * Calcination à l'étape b) | 1260°C | 1260°C | 1260°C |

### Cinquième série d'essais : fabrication de ferrites Ba₁₋ₓ Laₓ Fe_{12-y} Co_{y} O₁₉ avec x,y = 0,3

| | Essai 5a | Essai 5b | Essai 5c (invention) | |
|---|---|---|---|---|
| * Mélanges | mélange humide | mélange à sec | 1) dispersion fluide DF | |
| formés à | Fe₂O₃ : 32,6 % | Fe₂O₃: 81,4 % | | La₂O₃ : 21 % |
| l'étape a1) | BaCO₃ : 4,8 % | BaCO₃ : 12,1 % | | Co₃O₄ : 10 % |
| | La₂O₃ : 1,7 % | La₂O₃ : 4,3 % | | PEI : 2 % |
| | Co₃O₄ : 0,9 % | Co₃O₄ : 2,2 % | | Eau : 67 % |
| | eau : 60,0 % | + eau (14% | 2) mélange à sec MS | |
| | | du mélange de | | Fe₂O₃ : 87,0 % |
| | | poudres) | | BaCO₃ : 13,0 % |
| | | = mélange MP | | = mélange MP (inv.) |
| | | | | |
| * Granulation à l'étape a2) | ----- | eau : 1 % p. de MP | | eau : 1 % de MP |
| * Calcination à l'étape b) | 1180°C | 1180°C | | 1180°C |
| * Broyage (heures) à l'étape c) | 14 | 8 | | 10 |

| | | | | |
|---|---|---|---|---|
| Remarques : | | | | |
| - PEI est un polyéthylèneimine neutralisé par l'acide nitrique | | | | |
| - le mélange MP comprend 0,17 litre de dispersion DF par kg de mélange MS | | | | |

### Sixième série d'essais : elle ne diffère de la précédente que par la température de calcination.

| | Essai 6a | Essai 6b | Essai 6c |
|---|---|---|---|
| * Calcination à l'étape b) | 1270°C | 1270°C | 1270°C |

### RESULTATS DES ESSAIS :

Chaque essai a donné lieu aux mesures suivantes :
A) en ce qui concerne le clinker B obtenu à l'étape b), en sortie de four de calcination :
   - mesure du champ d'anisotropie Ha (kA/m)
   - mesure de la densité apparente dₐ
   - mesure de la taille des clinkers (diamètre équivalent) avec les valeurs minimum Tₘ et maximum T_{M} en mm
B) en ce qui concerne l'aimant E obtenu après l'étape e) de frittage :
   - mesure du champ d'anisotropie Ha (kA/m)
   - mesure du champ coercitif Hcj (kA/m)
   - mesure de la rémanence Br (T)
   - mesure du caractère carré du cycle d'hystérésis par le rapport Hk/HcJ (« squareness » en anglais)
Ces mesures ont été effectuées sur un hystérésigraphe MPS, sauf le champ d'anisotropie Ha qui a été mesuré selon la technique SPD par M. Roland Grossinger de l'Université Technique de Vienne (Autriche). Toutes les valeurs des mesures sont données à une température de 20°C.

| Première série d'essais : | Essai 1a | Essai 1b | Essai 1c |
|---|---|---|---|
| Sur clinker B: | | | (invention) |
| Champ d'anisotropie Ha | 1830 | 1552 | 1830 |
| Densité apparente | 2,8 | 2,2 | 2,8 |
| Plage de diamètre | 0,3 - 12 | 4,2 - 5,3 | 4,1 - 5,1 |

| Sur aimant final | | | |
|---|---|---|---|
| Champ d'anisotropie Ha | 1815 | 1560 | 1830 |
| Champ coercitif HcJ | 358 | 318 | 358 |
| Rémanence Br | 0,40 | 0,39 | 0,42 |
| Caractère carré (Hk/HcJ en %) | 87 | 80 | 92 |

Il est à noter que le champ d'anisotropie Ha est très élevé dans le cas des essais 1a et 1c (selon l'invention) et que cette valeur de Ha est sensiblement égale à la valeur voisine de la valeur obtenue par la courbe « théorique » de la figure 2, pour x = 0,3.
Selon la demanderesse, les mauvaises performances relatives des aimants de l'essai 1a par rapport à celles de l'essai 1c viendraient de la trop large dispersion de la taille des granulés de clinker : ces granulés présentent un diamètre équivalent qui varie dans un rapport de 1 à 40, de sorte que le broyage conduit à la formation d'un quantité trop importante de particules ultra-fines qui ne s'orientent pas à l'étape d). Par contre, les mauvaises performances relatives des aimants de l'essai 1b par rapport à celles de l'essai 1c viendraient du manque d'homogénéité de la composition chimique, si l'on compare les valeurs de Ha et de la masse spécifique apparente trop basses par rapport à celles de l'essai 1c.
On peut noter que le traitement de frittage ne modifie pas sensiblement la valeur de Ha, de sorte que les valeurs de Ha mesurées sur le clinker sont pratiquement les mêmes que celles mesurées sur l'aimant final.

| Deuxième série d'essais : | Essai 2a | Essai 2b | Essai 2c |
|---|---|---|---|
| Sur clinker : | | | |
| Champ d'anisotropie Ha | 1830 | 1632 | 1830 |
| Densité apparente | 3,8 | 2,8 | 3,8 |
| Plage de diamètre | 1,2 - 12 | 4,0 - 5,2 | 4,0 - 5,1 |

| Sur aimant final | | | |
|---|---|---|---|
| Champ d'anisotropie Ha | 1830 | 1616 | 1847 |
| Champ coercitif HcJ | 358 | 326 | 358 |
| Rémanence Br | 0,41 | 0,42 | 0,41 |
| Caractère carré (Hk/HcJ en %) | 82 | 87 | 87 |

Aucun de ces essais ne présente des performances optimisées : dans le cas des essais 2a et 2c, la densité apparente obtenue, trop élevée, a conduit à des temps de broyage très élevés (18 heures), ce qui a entraîné sans doute la formation d'une quantité trop importante de particules ultra-fines. Quant à l'essai 2b, il est légèrement meilleur que l'essai 1a, mais sa composition chimique manque toujours d'homogénéité. Le procédé selon l'invention exclut les températures de calcination élevées qui conduisent à un clinker de densité apparente trop grande.
On observe, seulement dans le cas où le clinker présente une valeur relativement basse (essai 2b), une légère augmentation de la valeur de Ha lorsqu'on augmente la température de calcination.

| Troisième série d'essais : | Essai 3a | Essai 3b | Essai 3c |
|---|---|---|---|
| Sur clinker : | | | |
| Champ d'anisotropie Ha | 1735 | 1552 | 1735 |
| Densité apparente | 2,8 | 2,2 | 2,8 |
| Plage de diamètre | 0,5 - 11 | 4,3 - 5,2 | 4,0 - 5,1 |

| Sur aimant final : | | | |
|---|---|---|---|
| Champ d'anisotropie Ha | 1727 | 1544 | 1727 |
| Champ coercitif HcJ | 342 | 318 | 342 |
| Rémanence Br | 0,40 | 0,39 | 0,42 |
| Caractère carré (Hk/HcJ en %) | 85 | 82 | 93 |

Les remarques faites à propos de la première série d'essais s'appliquent également à la troisième série d'essais. L'essai 3c est légèrement supérieur à l'essai 1c.

| Quatrième série d'essais : | Essai 4a | Essai 4b | Essai 4c |
|---|---|---|---|
| Sur clinker : | | | |
| Champ d'anisotropie Ha | 1735 | 1608 | 1735 |
| Densité apparente | 3,8 | 2,8 | 3,8 |
| Plage de diamètre | 1,2-12 | 4,0-5,2 | 4,0 - 5,1 |

| Sur aimant final : | | | |
|---|---|---|---|
| Champ d'anisotropie Ha | 1727 | 1830 | 1727 |
| Champ coercitif HcJ | 342 | 326 | 342 |
| Rémanence Br | 0,40 | 0,42 | 0,41 |
| Caractère carré (Hk/HcJ en %) | 83% | 86% | 86% |

Les remarques faites à propos de la deuxième série d'essais s'appliquent aussi à la quatrième série d'essais. Il y a peu de différences de résultats entre ces deux séries.

| Cinquième série d'essais : | Essai 5a | Essai 5b | Essai 5c |
|---|---|---|---|
| Sur clinker : | | | (invention) |
| Champ d'anisotropie Ha | 1568 | 1432 | 1568 |

| | | | |
|---|---|---|---|
| Densité apparente | 2,8 | 2,2 | 2,8 |
| Plage de diamètre | 0,4-12 | 4,2-5,2 | 4,1-5,3 |

| Sur aimant final : | | | |
|---|---|---|---|
| Champ d'anisotropie Ha | 1568 | 1448 | 1560 |
| Champ coercitif HcJ | 279 | 255 | 279 |
| Rémanence Br | 0,41 | 0,40 | 0,43 |
| Caractère carré (Hk/HcJ en %) | 85 | 82 | 92 |

Les remarques faites à propos de la première série d'essais s'appliquent également à la cinquième série d'essais.
L'essai 5c est inférieur à l'essai 1c parce que, intrinsèquement, le ferrite de Ba substitué présente un champ d'anisotropie Ha inférieur à celui du ferrite de Sr substitué, pour une même valeur de x et de y, comme le montrent les figures 2 et 3.

| Sixième série d'essais : | Essai 6a | Essai 6b | Essai 6c |
|---|---|---|---|
| Sur clinker : | | | |
| Champ d'anisotropie Ha | 1568 | 1472 | 1568 |
| Densité apparente | 3,8 | 2,8 | 3,8 |
| Plage de diamètre | 1,2 - 12 | 4,0 - 5,2 | 4,0 - 5,1 |

| Sur aimant final : | | | |
|---|---|---|---|
| Champ d'anisotropie Ha | 1568 | 1472 | 1560 |
| Champ coercitif HcJ | 279 | 263 | 279 |
| Rémanence Br | 0,41 | 0,40 | 0,43 |
| Caractère carré (Hk/HcJ en %) | 80 | 84 | 85 |

Les remarques faites à propos de la deuxième série d'essais s'appliquent aussi à la sixième série d'essais. Toutefois, comme indiqué à propos de la cinquième série d'essais, les performances de cette série sont inférieures à celles de la deuxième série à cause de la substitution de Sr par Ba.

### Conclusions générales de ces séries d'essais :

D'une part, la combinaison de moyens selon l'invention, à savoir une technique de formation de granulés homogènes en composition chimique et en taille, couplée avec des conditions de calcination conduisant à une densité dans une plage prédéterminée, conduit à des résultats très supérieurs à ceux obtenus avec les procédés connus, dans le cas des ferrites substitués.
D'autre part, la présente invention montre que les ferrites substitués de formule M₁₋ₓ Rₓ Fe_{12-y} T_{y} O₁₉ présentent des propriétés magnétiques optimum dans un domaine étroit pour x et y voisins de 0,2, d'autres séries d'essais effectués pour x,y = 0,1 ayant conduit à des résultats légèrement inférieurs à ceux obtenus avec x,y = 0,2.

### ESSAIS SUR DES MELANGES DE FERRITES

Dans cette série d'essais, on a préparé une première pâte ou dispersion aqueuse d'un premier clinker B, obtenue à la fin de l'étape c), correspondant à l'essai 1c (M = Sr, R = La, T = Co et x = y = 0,3, c'est-à-dire un ferrite de Sr substitué par La et Co), et une seconde pâte ou dispersion aqueuse d'un second clinker B', obtenue à la fin de l'étape c), et correspondant à un autre essai (essai 7) (M = Sr, x = y = 0, c'est-à-dire un ferrite de Sr non substitué).
On a effectué des mélanges de ces deux pâtes en fonction de z, proportion massique du premier clinker B de formule Sr₁₋ₓ Laₓ Fe_{12-y} Co_{y} O₁₉ dans le mélange des deux clinkers B et B' (Sr₁₋ₓ Laₓ Fe_{12-y} Co_{y} O₁₉ + SrFe₁₂O₁₉), selon les essais suivants 8 à 10. Puis on a poursuivi les étapes d et suivantes pour obtenir des aimant dont on a mesuré les propriétés comme dans les essais précédents :

| Essai | 7 | 8 | 9 | 10 | 1c (rappel) |
|---|---|---|---|---|---|
| z (% de B) | 0 | 25 | 50 | 75 | 100 |
| Champ d'anisotropie Ha | 1512 | 1592 | 1671 | 1751 | 1830 |
| Champ coercitif HcJ | 268 | 291 | 321 | 337 | 344 |
| Rémanence Br | 0,42 | 0,42 | 0,42 | 0,42 | 0,42 |
| Caractère carré (Hk/HcJ %) | 80 | 87 | 93 | 93 | 92 |

Conclusions : comme le montrent les figures 5a et 5c, on obtient, pour les mélanges de ferrites substitué et non substitué, des valeurs de HcJ et un rapport Hk/HcJ qui sont supérieurs à ce qui était attendu par la loi des mélanges. Ainsi, compte tenu du coût élevé des éléments de substitution (La et Co) dans les ferrites, il est donc évident qu'un même niveau de performances peut être obtenu à un coût moindre. Cette modalité de l'invention complète avantageusement et valorise encore davantage le procédé de fabrication selon l'invention. Elle permet ainsi de fabriquer des aimants dans lesquels une matière onéreuse (le ferrite substitué par La et Co) est « diluée » par une matière relativement bon marché (le ferrite non substitué) tout en ne diminuant que de façon très limitée les propriétés magnétiques finales, ce qui était tout à fait inattendu.
Cette modalité de l'invention trouvera son application dans les domaines où le rapport performance/coût l'emporte sur le seul critère de la performance.

### AVANTAGES DE L'INVENTION

Tout d'abord, l'invention divulgue une méthode générale de fabrication de ferrites substitués qui s'applique à tous les ferrites substitués de formule générale M₁₋ₓ Rₓ Fe_{12-y} T_{y} O₁₉.
Ensuite, l'invention enseigne comment modifier les procédés de fabrication connus pour tirer le meilleur parti de ces ferrites, dont les performances intrinsèques varient selon la natures des éléments M, R et T, de manière à obtenir des ferrites aux propriétés magnétiques optimisées.

En outre, il est important de noter que le procédé selon l'invention n'utilise pratiquement que les équipements ou moyens déjà bien connus de l'homme du métier, ce qui permet de fabriquer les ferrites selon l'invention pratiquement sans investissements spécifiques, les moyens utilisés par le procédé selon l'invention étant d'usage courant chez les fabricants d'aimants de type ferrite.
Par ailleurs, les coûts de fabrication sont moindres avec le procédé selon l'invention, toutes choses égales par ailleurs. En effet, les conditions de calcination étant plus douces (température et durée moindres) que celles habituellement utilisées, cette étape, dite étape b), est plus économique dans le procédé selon l'invention que dans le procédé traditionnel. De même en ce qui concerne l'étape de broyage, dite étape c), la durée du broyage permettant d'obtenir une taille particulaire prédéterminé, typiquement 0,8µm, est inférieure avec le procédé selon l'invention qui permet d'obtenir des clinkers friables grâce à leur densité située dans une plage prédéterminée.

De plus, la présente invention divulgue l'intérêt d'avoir des ferrites substitués de formule M₁₋ₓ Rₓ Fe_{12-y} T_{y} O₁₉ qui présentent des performances optimum dans une domaine étroit de valeur de x et y, typiquement autour de 0,2±0,1 ou de préférence autour de 0,2± 0,05, dans le cas où M = Sr, R = La et T = Co, bien que, sur la base des valeurs du champ d'anisotropie Ha des figures 2 et 3, il aurait été tout indiqué de choisir x et y supérieurs à 0,35.

Enfin, l'invention permet, à performances magnétiques sensiblement égales, de diminuer le coût des aimants, en « diluant » un clinker « onéreux » à base de ferrite substitué, par un clinker « bon marché » à base de ferrite non substitué.
Ainsi, l'invention dans son ensemble permet de tirer le meilleur rapport qualité/prix possible pour un ferrite de formule générique M₁₋ₓ Rₓ Fe_{12-y} T_{y} O₁₉ donnée, ce qui présente à la fois un grand intérêt technique et économique.

### LISTE DES REPERES

- Mélangeur à sec: 1
- Disperseur en phase liquide: 2
- Mélangeur à poudres: 3
- Granulateur: 4
- Four de calcination: 5
- Broyeur-disperseur du clinker: 6

## Revendications

1. Procédé de fabrication d'aimants permanents de type ferrite comprenant une phase magnétoplumbite de formule M₁₋ₓ Rₓ Fe_{12-y} T_{y} O₁₉ dans laquelle M = Ba, Sr, Ca ou Pb, R = Bi ou éléments de la famille des terres rares, T = Mn, Co, Ni, Zn, avec x et y compris entre 0,05 et 0,5 dans lequel :
a1) on forme dans un moyen de mélange, typiquement un mélangeur (3) fonctionnant en discontinu, un mélange pulvérulent MP des matières premières relatives aux éléments M, R, Fe et T, typiquement sous forme d'oxyde, de carbonate ou d'hydroxyde, comprenant de l'eau en quantité prédéterminée, typiquement nécessaire à la formation de granulés dans l'étape subséquente,
a2) puis on transforme, typiquement dans un granulateur (4), ledit mélange en granulés à vert A, avec une éventuelle addition d'eau complémentaire,
b) on calcine lesdits granulés à vert dans un four de calcination (5) pour former un clinker B, à base de phase magnétoplumbite de formule M₁₋ₓ, Rₓ Fe_{12-y} T_{y} O₁₉,
c) on effectue un broyage humide dudit clinker, typiquement dans un appareil de dispersion (6) en milieu aqueux, pour obtenir une dispersion homogène C de fines particules désagglomérées de taille particulaire moyenne inférieure à 1,2 µm,
d) on concentre et comprime lesdites particules sous champ magnétique orienteur pour former un comprimé à vert D, anisotrope, manipulable et de forme prédéterminée,
e) on fritte ledit comprimé à vert D anisotrope pour obtenir un élément fritté E,
f) on effectue éventuellement une mise aux dimensions finales dudit élément fritté E, typiquement par usinage, procédé **caractérisé en ce que**,
1) à l'étape a1) du procédé, on forme ledit mélange MP, en introduisant dans ledit moyen de mélange (3), un mélange à sec MS de poudres correspondant aux dites matières premières relatives aux éléments M et Fe, formé typiquement dans un mélangeur à sec (1), et une dispersion fluide homogène DF desdites matières premières relatives aux éléments R et T dans typiquement ladite quantité d'eau prédéterminée, formée typiquement dans un appareil de dispersion (2)
2) à l'étape b) du procédé, on calcine lesdits granulés à vert A à une température et pendant un temps choisis,
de manière à obtenir, en sortie de four de calcination (5) à la fin de l'étape b), un clinker B qui soit à la fois homogène en composition chimique et en taille, et de basse densité apparente, comprise entre 2,5 et 3,5, et qui soit facile à broyer lors de l'étape c).

2. Procédé selon la revendication 1 dans lequel ladite dispersion fluide comprend :
- eau : 55 à 85 % en poids
- élément R (exprimé sous forme d'oxyde) : 10 à 30 % en poids
- élément T (exprimé sous forme d'oxyde) : 5 à 15 % en poids

3. Procédé selon une quelconque des revendications 1 et 2 dans lequel ladite dispersion fluide DF comprend un agent défloculant ou dispersant, de manière à avoir une dispersion présentant à la fois une basse viscosité et un état de fine dispersion, la tailles moyenne des particules ou agglomérats relatifs aux éléments R et T étant inférieure à 25 µm.

4. Procédé selon la revendication 3 dans lequel ladite dispersion fluide DF comprend ledit agent défloculant ou dispersant à une teneur pondérale comprise entre 0,5 et 2 %.

5. Procédé selon une quelconque des revendications 1 à 4 dans lequel on introduit dans ledit mélangeur (3), ledit mélange à sec de poudres MS, et ladite dispersion fluide DF, 0,1 à 0,2 litre de ladite dispersion fluide DF étant introduit par kilogramme dudit mélange à sec MS.

6. Procédé selon une quelconque des revendications 1 à 5 dans lequel, à l'étape b), ladite calcination est effectuée à une température et pendant une durée choisies pour obtenir un clinker B de une densité apparente dₐ allant de 2,7 à 3,1.

7. Procédé selon la revendication 6 dans lequel ladite calcination est effectuée à une température et pendant une durée choisies pour obtenir un clinker B de densité apparente dₐ allant de 2,75 à 3.

8. Procédé selon une quelconque des revendications 1 à 7 dans lequel on choisit M = Sr, R = La et T = Co dans la formule M₁₋ₓ Rₓ Fe_{12-y} T_{y} O₁₉.

9. Procédé selon une quelconque des revendications 1 à 8 dans lequel on choisit x = y dans la formule M₁₋ₓ Rₓ Fe_{12-y} T_{y} O₁₉.

10. Procédé selon une quelconque des revendications 1 à 9 dans lequel x et y sont compris entre 0,10 et 0,35.

11. Procédé selon la revendication 10 dans lequel x et y sont compris entre 0,15 et 0,25.

12. Procédé selon une quelconque des revendications 1 à 11 dans lequel, à l'étape d), on comprime lesdites particules sous une pression de 30-50 MPasous champ magnétique orienteur d'environ 1 Tesla.

13. Procédé selon une quelconque des revendications 1 à 12 dans lequel, à l'étape c) dudit procédé, on mélange audit clinker B de formule M₁₋ₓ Rₓ Fe_{12-y} T_{y} O₁₉ un clinker B' de formule M Fe₁₂ O₁₉, de manière à ce que la proportion massique Z de clinker B dans le mélange des deux clinkers B et B' est comprise entre 0,20 et 0,80, et de préférence entre 0,30 et 0,70.

14. Procédé selon la revendication 13 dans lequel la proportion massique z de clinker B de formule M₁₋ₓ Rₓ Fe_{12-y} T_{y} O₁₉, dans le mélange des deux clinkers B et B' est comprise entre 0,20 et 0,80.

15. Procédé selon la revendication 14 dans lequel la proportion massique z est comprise entre 0,30 et 0,70.

16. Procédé selon une quelconque des revendications 13 à 15 dans lequel ledit clinker B' de formule M Fe₁₂ O₁₉ présente une densité apparente dₐ comprise entre 2,5 et 3,5.

17. Procédé selon une quelconque des revendications 1 à 16 dans lequel l'étape b) de calcination est pilotée, notamment en ce qui concerne la température de calcination, en mesurant la densité apparente dₐ du clinker obtenu à l'issue de cette étape b).

18. Procédé de fabrication d'une poudre de ferrite par le procédé de fabrication d'aimants permanents selon une quelconque des revendications 1 à 12 dans lequel, à l'issue de l'étape b), on réduit en poudre ledit clinker B, et dans lequel les étapes suivantes c) à f) sont supprimées.

19. Aimants permanents de ferrite obtenus par le procédé selon une quelconque des revendications 1 à 17 présentant un champ d'anisotropie au moins égal à 1711 kA/m.

20. Aimants permanents selon la revendication 19 présentant un champ d'anisotropie au moins égal à 1751 kA/m.

21. Aimants permanents selon la revendication 20 présentant un champ d'anisotropie au moins égal à 1791 kA/m.

22. Moteurs comprenant des aimants selon une quelconque des revendications 19 à 21

## Claims

1. Method for making permanent magnets of the ferrite type comprising a magnetoplumbite phase with the formula M₁₋ₓRₓFe_{12-y}TyO₁₉, in which M = Ba, Sr, Ca or Pb, R = Bi or elements of the rare earths family, T = Mn, Co, Ni, Zn, with x and y being between 0.05 and 0.5, in which:
a1) in a mixing means, typically a mixer (3) functioning discontinuously, a pulverulent mixture MP is formed of raw materials related to the elements M, R, Fe and T, typically in the form of oxides, carbonates or hydroxides, comprising water in a predetermined quantity, which is typically necessary for the formation of granules in the subsequent stage,
a2) said mixture is then transformed into green granules A, typically in a granulator (4), with the optional addition of extra water,
b) said green granules are then calcined in a calcination furnace (5) to form a clinker B, with a magnetoplumbite phase base with the formula M₁₋ₓRₓFe_{12-y}T_{y}O₁₉,
c) said clinker is then wet ground, typically in a dispersion device (6) in aqueous medium, to obtain a homogeneous dispersion C of fine deagglomerated particles of average particle size less than 1.2 µm,
d) said particles are concentrated and compressed under an orienting magnetic field to form a green compact D, that is anisotropic, able to be manipulated and of predetermined shape,
e) said anisotropic green compact D is sintered to obtain a sintered element E, and
f) the final dimensions of said sintered element E are then defined, typically by machining, the method being **characterised in that**:
1) at stage a1) of the method, said mixture MP is formed, by introducing into said mixing means (3), a dry mixture MS of powders corresponding to said raw materials relative to the elements M and Fe, formed typically in a dry mixer (1), and a homogeneous fluid dispersion DF of said raw materials relative to the elements R and T in typically the said predetermined quantity of water, formed typically in a dispersion device (2),
2) at stage b) of the method, said green granules A are calcined at a chosen temperature and for a chosen duration, in such a way as to obtain, at the exit of the calcination furnace (5) at the end of stage b), a clinker B which is both homogeneous in chemical composition and size, and of low apparent density, between 2.5 and 3.5, and which can be ground easily during stage c).

2. Method according to claim 1 in which said fluid dispersion comprises:
- water: 55 to 85% by weight
- element R (expressed in oxide form): 10 to 30% by weight
- element T (expressed in oxide form): 5 to 15% by weight.

3. Method according to any one of claims 1 and 2 in which said fluid dispersion DF comprises a deflocculating agent or dispersing agent, in such a way as to obtain a dispersion with both low viscosity and a state of fine dispersion, the average sizes of the particles or agglomerates relative to elements R and T being less than 25 µm.

4. Method according to claim 3 in which said fluid dispersion DF comprises said deflocculating or dispersing agent with a weight content of between 0.5 and 2%.

5. Method according to any one of claims 1 to 4 in which said dry mixture of powders MS and said fluid dispersion DF is introduced into said mixer (3), 0.1 to 0.2 litres of said fluid dispersion DF being introduced per kilogram of said dry mixture MS.

6. Method according to any one of claims 1 to 5 in which, at stage b), said calcination is carried out at a temperature and for a length of time chosen in order to obtain a clinker B of apparent density dₐ ranging from 2.7 to 3.1.

7. Method according to claim 6 in which said calcination is carried out at a temperature and for a duration selected to obtain a clinker B of apparent density dₐ of 2.75 to 3.

8. Method according to any one of claims 1 to 7 in which M = Sr, R = La and T = Co in the formula M₁₋ₓRₓFe_{12-y}T_{y}O₁₉

9. Method according to any one of claims 1 to 8 in which x = y in the formula M₁₋ₓRₓFe_{12-y}T_{y}O₁₉.

10. Method according to any one of claims 1 to 9 in which x and y are between 0.10 and 0.35.

11. Method according to claim 10 in which x and y are between 0.15 and 0.25.

12. Method according to any one of claims 1 to 11 in which, in stage d), said particles are compressed under a pressure of 30-50 MPa under an orienting magnetic field of about 1 Tesla.

13. Method according to any one of claims 1 to 12 in which in step c) of said method a clinker B' of formula MFe₁₂O₁₉ is mixed with said clinker B of the formula M₁₋ₓRₓFe_{12-y}T_{y}O₁₉, in such a way that the weight proportion Z of clinker B in the mixture of the two clinkers B and B' is between 0.20 and 0.80, preferably between 0.30 and 0.70.

14. Method according to claim 13 in which the weight proportion z of clinker B of the formula M₁₋ₓRₓFe_{12-y}T_{y}O₁₉ in the mixture of the two clinkers B and B' is between 0.20 and 0.80.

15. Method according to claim 14 in which the weight proportion z is between 0.30 and 0.70.

16. Method according to any one of claims 13 to 15 in which said clinker B' of formula M Fe₁₂ O₁₉ has an apparent density dₐ of between 2.5 and 3.5.

17. Method according to any one of claims 1 to 16 in which stage b) of the calcination is controlled, in particular with regard to the calcination temperature, by measuring the apparent density dₐ of the clinker obtained at the end of stage b).

18. Method for manufacturing a ferrite powder by means of the method for making permanent ferrite magnets according to any one of claims 1 to 12 in which at the end of stage b) said clinker B is reduced to a powder and in which the following stages c) to f) are omitted.

19. Permanent ferrite magnets obtained by means of the method according to any of the claims 1 to 17 having an anisotropy field of at least 1711 kA/m.

20. Permanent ferrite magnets according to claim 19 having an anisotropy field of at least 1751 kA/m.

21. Permanent ferrite magnets according to claim 20 having an anisotropy field of at least 1791 kA/m.

22. Motors comprising the magnets according to any one of claims 19 to 21.

## Patentansprüche

1. Verfahren zur Herstellung von Permanentmagneten vom Ferrit-Typ, die umfassen eine Magnetoplumbit-Phase der Formel M₁₋ₓRₓFe_{12-y}T_{y}O₁₉, in der M = Ba, Sr, Ca oder Pb, R = Bi oder ein Element aus der Familie der Seltenen Erden, T = Mn, Co, Ni, Zn und x und y stehen für eine Zahl zwischen 0,05 und 0,5, bei dem man:
a1) in einem Mischer, in der Regel einem diskontinuierlich arbeitenden Mischer (3), eine pulverförmige Mischung MP der Ausgangsmaterialien für die Elemente M, R, Fe und T, in der Regel in einer Oxid-, Carbonat- oder Hydroxid-Form, herstellt, die Wasser in einer vorgegebenen Menge enthält, die in der Regel erforderlich ist für die Bildung von Pellets in der nachfolgenden Stufe,
a2) dann die Mischung in der Regel in einem Granulator (4) in Grünpellets A überführt, gegebenenfalls unter Zugabe von ergänzendem Wasser,
b) die genannten Grünpellets in einem Calcinierungsofen (5) calciniert zur Bildung eines Klinkers B, auf Basis einer Magnetoplumbit-Phase der Formel M₁₋ₓRₓFe_{12-y}T_{y}O₁₉,
c) den genannten Klinker nass mahlt, in der Regel in einer Dispergiervorrichtung (6) in einem wässrigen Medium, zur Herstellung einer homogenen Dispersion C von desagglomerierten feinen Teilchen mit einer mittleren Teilchengröße von unter 1,2 µm,
d) die genannten Teilchen unter der Einwirkung eines orientierenden Magnetfeldes einengt und presst zur Bildung einer anisotropen, handhabbaren Grüntablette D mit einer vorgegebenen Gestalt,
e) die genannte aniostrope Grüntablette D sintert zur Bildung eines gesinterten Elements E und
f) das genannte gesinterte Element E gegebenenfalls auf die endgültigen Dimensionen bringt, in der Regel durch maschinelle Bearbeitung,
wobei das Verfahren **dadurch gekennzeichnet ist, dass**
1) in der Stufe (a1) des Verfahrens die genannte Mischung MP gebildet wird, indem man in den genannten Mischer (3) einführt eine trockene Mischung MS von Pulvern, die den genannten Ausgangsmaterialien für die Elemente M und Fe entsprechen, die in der Regel in einem Trockenmischer (1) hergestellt worden ist, und eine homogene fließfähige Dispersion DF der genannten Ausgangsmaterialien für die Elemente R und T in der Regel in der genannten vorgegebenen Wassermenge, die in der Regel in einer Dispergiervorrichtung (2) gebildet worden ist, und
2) in der Stufe (b) des Verfahrens die genannten Grünpellets A bei einer solchen Temperatur und für eine solche Zeitspanne calciniert, dass man am Auslass des Calcinierungsofens (5) am Ende der Stufe (b) einen Klinker B erhält, der sowohl homogen in Bezug auf seine chemische Zusammensetzung als auch in Bezug auf seine Form (Gestalt) ist und eine scheinbare Dichte zwischen 2,5 und 3,5 aufweist, der in der Stufe (c) leicht gemahlen (zerkleinert) werden kann.

2. Verfahren nach Anspruch 1, in dem die genannte fließfähige Dispersion umfasst:
- 55 bis 85 Gew.-% Wasser
- 10 bis 30 Gew.-% eines Elements R (ausgedrückt als Oxid) und
- 5 bis 15 Gew.-% eines Elements T (ausgedrückt als Oxid).

3. Verfahren nach einem der Ansprüche 1 und 2, bei dem die genannte fließfähige Dispersion DF ein Peptisationsmittel oder Dispergiermittel enthält, sodass man eine Dispersion erhält, die gleichzeitig eine niedrige Viskosität und einen feinen Dispersionszustand aufweist, wobei die mittlere Teilchengröße der Teilchen oder Agglomerate in Bezug auf die Elemente R und T unter 25 µm liegt.

4. Verfahren nach Anspruch 3, bei dem die genannte fließfähige Dispersion DF das genannte Peptisationsmittel oder Dispergiermittel in einer Menge zwischen 0,5 und 2 Gew.-% enthält.

5. Verfahren nach einem der Ansprüche 1 bis 4, bei dem man in den genannten Mischer (3) die genannte trockene Mischung von Pulvern MS und die genannte fließfähige Dispersion DF einführt, wobei 0,1 bis 0,2 I der genannten fließfähigen Dispersion DF pro kg der genannten trockenen Mischung MS eingeführt werden.

6. Verfahren nach einem der Ansprüche 1 bis 5, bei dem in der Stufe (b) die genannte Calcinierung bei einer solchen Temperatur und für eine solche Zeitspanne durchgeführt wurde, dass man einen Klinker B mit einer scheinbaren Dichte dₐ von 2,7 bis 3,1 erhält.

7. Verfahren nach Anspruch 6, bei dem die genannte Calcinierung bei einer solchen Temperatur und für eine solche Zeitspanne durchgeführt wird, dass man einen Klinker B mit einer scheinbaren Dichte dₐ von 2,75 bis 3 erhält.

8. Verfahren nach einem der Ansprüche 1 bis 7, bei dem man in der Formel M₁₋ₓRₓFe_{12-y}T_{y}O₁₉ auswählt M = Sr, R = La und T = Co.

9. Verfahren nach einem der Ansprüche 1 bis 8, bei dem man in der Formel M₁₋ₓRₓFe_{12-y}T_{y}O₁₉ auswählt x = y.

10. Verfahren nach einem der Ansprüche 1 bis 9, bei dem x und y zwischen 0,10 und 0,35 liegen.

11. Verfahren nach Anspruch 10, bei dem x und y zwischen 0,15 und 0,25 liegen.

12. Verfahren nach einem der Ansprüche 1 bis 11, bei dem man in der Stufe (d) die Teilchen unter einem Druck von 30 bis 50 MPa in Gegenwart eines orientierenden Magnetfeldes von etwa 1 Tesla presst.

13. Verfahren nach einem der Ansprüche 1 bis 12, bei dem man in der Stufe (c) dem genannten Klinker B der Formel M₁₋ₓRₓFe_{12-y}T_{y}O₁₉ einen Klinker B' der Formel MFe₁₂O₁₉ so zumischt, dass der Massenanteil z des Klinkers B in der Mischung der beiden Klinker B und B' zwischen 0,20 und 0,80, vorzugsweise zwischen 0,30 und 0,70, liegt.

14. Verfahren nach Anspruch 13, bei dem der Massenanteil z des Klinkers B der Formel M₁₋ₓRₓFe_{12-y}T_{y}O₁₉ in der Mischung der beiden Klinker B und B' zwischen 0,20 und 0,80 liegt.

15. Verfahren nach Anspruch 14, bei dem der Massenanteil z zwischen 0,30 und 0,70 liegt.

16. Verfahren nach einem der Ansprüche 13 bis 15, bei dem der genannte Klinker B' der Formel MFe₁₂O₁₉ eine scheinbare Dichte dₐ aufweist, die zwischen 2,5 und 3,5 liegt.

17. Verfahren nach einem der Ansprüche 1 bis 16, bei dem in der Stufe (b) die Calcinierung gesteuert wird, insbesondere was die Calcinierungstemperatur angeht, indem man die scheinbare Dichte dₐ des am Ende dieser Stufe (b) erhaltenen Klinkers misst.

18. Verfahren zur Herstellung eines Ferrit-Pulvers nach dem Verfahren zur Herstellung von Permanentmagneten nach einem der Ansprüche 1 bis 12, bei dem man am Ende der Stufe (b) den genannten Klinker B zu einem Pulver mahlt und die sich daran anschließenden Stufen (c) bis (f) weglässt.

19. Ferrit-Permanentmagnete, wie sie nach dem Verfahren nach einem der Ansprüche 1 bis 17 erhalten worden sind, die ein Anisotropie-Feld von mindestens gleich 1711 kA/m aufweisen.

20. Permanentmagnete nach Anspruch 19, die ein Anisotropie-Feld von mindestens gleich 1751 kA/m aufweisen.

21. Permanentmagnete nach Anspruch 20, die ein Anisotropie-Feld von mindestens gleich 1791 kA/m aufweisen.

22. Motoren, die Magnete nach einem der Ansprüche 19 bis 21 enthalten.
